Europäisches Patentamt

European Patent Office

Office européen des brevets

(19)

(11) Publication number: **0 149 038**

**A2**

(12) # EUROPEAN PATENT APPLICATION

(21) Application number: **84113316.8**

(22) Date of filing: **06.11.84**

(51) Int. Cl.⁴: **C 08 F 212/14**

(30) Priority: **29.12.83 US 565845**

(43) Date of publication of application:
**24.07.85 Bulletin 85/30**

(84) Designated Contracting States:
**AT BE CH DE FR GB IT LI NL SE**

(71) Applicant: **AMERICAN CYANAMID COMPANY**
**1937 West Main Street P.O. Box 60**
**Stamford Connecticut 06904(US)**

(72) Inventor: **Forgione, Peter Salvatore**
**120 Little Hill Drive**
**Stamford Connecticut 06905(US)**

(72) Inventor: **Sedlak, John Andrew**
**249-11 Hamilton Avenue**
**Stamford Connecticut 06902(US)**

(72) Inventor: **Singh, Balwant**
**93 Janes Lane**
**Stamford Connecticut 06903(US)**

(74) Representative: **Wächtershäuser, Günter, Dr.**
**Tal 29**
**D-8000 München 2(DE)**

(54) Cationic copolymerization of meta- or paraisopropenyl-alpha,alpha-dimethylbenzylisocyanate.

(57) A method of making an organic solvent-soluble, substantially linear copolymer of meta- or para-isopropenyl-α, α-dimethylbenzylisocyanate and at least one other ethylenically unsaturated non-methacrylate or nonacrylate comonomer selected from the group consisting of styrene, α-methylstyrene, p-methyl-α-methylstyrene, and p-methylstyrene, comprising polymerizing the meta- or para-isopropenyl-α, α-dimethylbenzylisocyanate and said at least one other ethylenically unsaturated comonomer in non-aqueous solution and in the presence of a cationic polymerization catalyst.

CATIONIC COPOLYMERIZATION OF META-
OR PARA-ISOPROPENYL- α,α -
DIMETHYLBENZYLISOCYANATE

BACKGROUND OF THE INVENTION

This invention relates to copolymers of meta-
or para-isopropenyl- α,α -dimethylbenzylisocyanate and
to a method of making same by cationic polymerization.

In U.S. Patent Application Serial No. 400,799,
filed June 22, 1982, there is disclosed a method for
production of tertiary aralkyl isocyanates, such as
tetramethyl xylylene diisocyanates (TMXDI), by thermal
cracking of corresponding urethanes formed by addition
of corresponding olefins and carbamic acid esters at
moderate temperatures and in the presence of acid
catalyst. Such process is particularly useful in
producing the meta- and para-isomers of TMXDI and as the
by-product thereof, substantial amounts of the corresponding vinyl isocyanate meta- and para-isomers (i.e.,
meta-isopropenyl- α,α -dimethylbenzylisocyanate (m-TMI)
or para-isopropenyl- α,α -dimethylbenzylisocyante (p-TMI),
respectively) are formed.

The meta-TMI or para-TMI by-products in such
systems may be recycled within the process to improve
the overall yield of TMXDI therein, but such by-products
have substantial utility per se due to their difunctional character, viz., the presence of reactive isocyanato
(-NCO) and vinyl groups. Thus, TMI may be homo- or copolymerized to form polymers with isocyanate functionality which are cross-linkable with curatives containing
a difunctional or polyfunctional amino or hydroxyl
compound. Such cross-linkable compositions have film-
forming properties and advantageously may be used for
coatings as for example on metal, wood and glass
substrates, as well as having potential applicability for production of molded articles, such as by reaction injection molding (RIM).

U.S. Patent No. 3,290,350 discloses the copolymerization of TMI by conventional methods using known addition polymerization initiators, such as those of the free radical type, e.g., peroxy and azo initiators. More specifically, this patent discloses copolymerization of meta-TMI in a solution of benzene containing 1,1-azodicyclohexane carbonitrile with ethylene, introduced into the reaction system as a gas at elevated pressure, the polymerization being carried out at a temperature of 115-125°C. The resulting copolymer is precipitated from benzene solution at ambient temperature, as a result of its insolubility in benzene at such ambient levels, and is generally characterized by low isocyanate content in the polymer.

The ambient temperature insolubility of the TMI copolymer produced by the above procedure in benzene and similar aromatic solvents, e.g., toluene and benzene, is a severe disadvantage, in view of desirable end-use applications such as coatings and reaction injection molding wherein it is desired to dissolve or disperse the copolymer in such aromatic solvents. Further, the presence of any significant cross-linking in the resultant copolymer is destructive of the linear structure thereof and may result in premature gelation of the copolymer when employed in end-use applications such as coatings.

The prior art processes are also not readily adaptable to the preparation of copolymers of m- and p-TMI with monomers which are free of acrylic, methacrylic, acrylate and/or methacrylate unsaturation, and yet which are vinyl aromatics, e.g., styrene and α - methyl styrene. It is believed that this is because the vinyl aromatics have a reactivity ratio which makes them difficult to copolymerize with conventional free radical systems. In any event, the problem can be overcome and copolymers uniquely suitable, e.g., for hydrophobic coatings (after conversion of pendent isocyanate to amino group) having moderately high molecular weights, e.g., 5,000 to 50,000, can be provided, e.g., for paper sizing applications.

Accordingly, it is an object of the present invention to provide a method of making organic solvent-soluble, substantially linear TMI copolymers (meta-TMI or para-TMI) which are substantially free of unsaturation and cross-linking.

It is a further object of the invention to provide a method for making copolymers of the above type which have moderately high molecular weights, e.g., on the order of 500 to about 500,000, preferably 5,000 to 50,000.

It is a still further object of the invention to provide a method for making such copolymers, which does not result in formation of residual unsaturation or cross-linking in the product copolymer, and which include a high content of vinyl aromatic comonomer.

Other objects and advantages of the present invention will be apparent from the ensuing disclosure and appended claims.

## SUMMARY OF THE INVENTION

The present invention relates to a method of making an organic solvent-soluble substantially linear copolymer of meta- or para-isopropenyl- $\alpha,\alpha$ -dimethyl-benzylisocyanate and at least one other ethylenically unsaturated comonomer which is not an acrylate and/or a methacrylate and which is selected from the group consisting of styrene, $\alpha$-methylstyrene, p-methyl- $\alpha$-methyl-styrene and p-methylstyrene, which comprises solution polymerizing the meta-or para-isopropenyl- $\alpha,\alpha$ -dimethyl-benzylisocyanate and said at least one other ethylenically unsaturated comonomer in non-aqueous solution and in the presence of a cationic polymerization catalyst.

The non-aqueous solution employed in the cationic polymerization may suitably comprise a methylene chloride solution.

The cationic polymerization catalyst preferably is boron trifluoride etherate ($BF_3 \bullet Et_2O$) or stannic chloride ($SnCl_4$), although any suitable catalysts for the cationic polymerization, e.g., Lewis acids or Friedel-Crafts catalysts such as $AlCl_3$, $AlBr_3$, or other strong acid functioning as a strong electron acceptor, may be employed. As will be appreciated, the aforementioned catalysts, excepting the strong protonic acids thereof, may require a co-catalyst such as a Lewis base or other electron donor to initiate polymerization.

The cationic polymerization process of the present invention permits high molecular weight TMI-styrene or TMI-styrene derivative copolymers to be produced at high rate, particularly at low temperatures, on the order of from about -80°C to about 0°C.

In a preferred aspect of the invention, the cationic copolymerization method is employed to produce a copolymer containing from about 5 to about 80 mole percent repeating units derived from meta- or para-TMI and from about 20 to about 95 mole percent repeating units derived from the said at least one other ethylenically unsaturated comonomer (i.e., styrene, α-methylstyrene, p-methyl- α-methylstyrene, and p-methylstyrene) having a molecular weight of from about 500 to about 500,000, preferably 5,000 to 50,000.

In another preferred aspect of the invention, the copolymer produced by cationic copolymerization contains from about 30 to about 80, preferably 40 to 70, mole percent repeating units derived from meta- or para-TMI and from about 20 to about 70, preferably 30 to 60, mole percent repeating units derived from styrene or α -methylstyrene, wherein the cationic polymerization catalyst is $BF_3 Et_2O$, and wherein the solution polymerization is carried out at a temperature of from about -80°C to about 0°C. Such process is preferably carried out by the method (hereinafter denoted the "continuous addition" or "controlled addition" method) comprising the steps of:

(a) forming a reaction volume comprising nonaqueous solvent, $BF_3 Et_2O$, and all of said meta- or para-isopropenyl- α, α-dimethylbenzylisocyanate to be incorporated into said copolymer and from 25 to about 50 percent of said total amount of styrene or α-methylstyrene to be incorporated into said copolymer; and

(b) adding the remaining portion of said styrene or α-methylstyrene to said reaction volume under polymerization reaction conditions while maintaining a substantially constant monomeric composition in said reaction volume, to form said copolymer with a substantially homogeneous polymeric composition.

In some instances of the application of the continuous addition method, it may be desirable to add additional cationic copolymerization catalyst in the course of the polymerization reaction, to drive the reaction to completion, since in some instances the catalyst may be consumed in the reaction.

As indicated, the copolymers produced by the method of the present invention are organic solvent-soluble, substantially linear copolymers which are substantially free of cross-linking and unsaturation.

As used herein, "organic solvent-soluble" means that the copolymer is soluble, at ambient temperature inter alia, in toluene, xylene and benzene.

As also used herein, "substantially free of unsaturation and cross-linking" means that the copolymer contains less than one percent (1%) by weight of ethylenically unsaturated groups.

As indicated, the copolymers in the present invention have utility in coatings and in the forming of molded objects. In addition, such copolymers may be used in the sizing of paper, by acidic hydrolysis of the TMI copolymer to yield a polymeric product wherein the isocyanato (-NCO) groups have been hydrolyzed to free amino groups. Such hydrolyzed copolymers may then be employed in a solvent solution, e.g., dilute aqueous acetic acid, for sizing of paper by contact of the polymeric solution therewith.

The character of the present invention is more fully illustrated by the following non-limiting examples set forth hereinafter, wherein all parts and percentages are by weight, unless otherwise stated.

## EXAMPLE I

A 70 mole percent m-TMI/30 mole percent α-methyl-styrene copolymer was prepared by cationic polymerization as follows.

A stirred reactor was charged with 2.80 g. (0.0139 mole) of m-TMI, 0.28 g. (0.00237 mole) of α-methylstyrene, and 31.5 g. of methylene chloride. Under dry nitrogen, the solution was cooled in a -50°C dry ice-acetone bath. A syringe was activated to add 0.42 g. (0.00356 mole) of α-methylstyrene at a constant rate during 60 minutes. Simultaneously the addition of 0.0845 g. (0.000595 mole) of $BF_3 \bullet Et_2O$ in 3.64 ml. of methylene chloride solution was started, and this was completed in one minute.

At 160 minutes after the start of the copolymerization, 86% of the m-TMI and 96% of the α-methyl-styrene were consumed (89% total monomers conversion) and the clear, colorless solution became more viscous. An additional 1.00 ml. of the $BF_3 \bullet Et_2O$ solution was charged during one minute. After 45 minutes more, the m-TMI conversion was 90% and the α-methylstyrene conversion was 98% (92% total conversion). Then, 0.25 ml. of pyridine in 3.0 ml. of methylene chloride was added during one minute (to destroy residual $BF_3 \bullet Et_2O$) and the solution was allowed to warm to room temperature.

Rotary vacuum evaporation yielded 3.00 g. of white solid. Gel permeation chromatography (polystyrene standards) showed a molecular weight range of 5100-270,000, with peak molecular weight of 29,000.

## EXAMPLE II

A 10 mole percent m-TMI/90 mole percent styrene (hereinafter denoted ST) copolymer was prepared in methylene chloride solution using $BF_3 \cdot Et_2O$ as catalyst at a temperature of -78°C. The polymerization proceeded rapidly with high monomer conversion, yielding a copolymer of peak molecular weight of 210,000.

## EXAMPLE III

A 30 mole percent m-TMI/70 mole percent ST copolymer was prepared in methylene chloride solution using $BF_3 \cdot Et_2O$ as catalyst at temperatures of -78°C and -25°C. Relative to the results in Example II, low monomer conversion was obtained.

## EXAMPLE IV

A 30 mole % m-TMI/70 mole % ST copolymer was prepared in methylene chloride solution using $SnCl_4$ catalyst and a reaction temperature of -50°C. Polymerization proceeded to high conversion of monomers, but too rapidly to permit "controlled addition" of the monomers to the reaction volume.

## EXAMPLE V

A 30 mole % m-TMI/70 mole % ST copolymer was prepared using $SnCl_4$ catalyst in a reaction solution of 90 volume % methylene/10 volume % toluene at -50°C. Polymerization proceeded to high conversion, but with 23% loss of -NCO functionality relative to the starting TMI monomer.

## EXAMPLE VI

A series of separate copolymerization reactions was run to produce 40% m-TMI/60% α-MeST, 50% m-TMI/50% α-MeST, and 70% m-TMI/30% α-MeST copolymers (percentages are mole percent; α-MeST = α-methylstyrene) in methylene chloride solvent using $BF_3 \cdot Et_2O$ catalyst at -50°C, with "controlled addition" of α-MeST to the reaction volume containing m-TMI, catalyst and solvent. High conversion of monomers was achieved to yield copolymers of substantially homogeneous composition having peak molecular weights of 20,000 to 50,000.

## EXAMPLE VII

The copolymers of Example VI were hydrolyzed under acidic conditions (in excess hydrochloric acid aqueous solution) to convert the isocyanate (-NCO) groups of the TMI copolymers to amino groups. Of the resulting hydrolyzed copolymers, the 30% α-MeST copolymer was completely soluble in aqueous acid (acetic acid), whereas the 50% and 60% α-MeST copolymers were not so fully soluble.

## EXAMPLE VIII

The 70% m-isopropenyl- α,α -dimethylbenzyl-amine/30% α-MeST copolymer (hereinafter denoted TMA copolymer) of Example VII (peak molecular weight of 27,000) was employed in quantitative tests for sizing of paper as compared with prior art conventional sizing compositions.

In the comparison, three grades of paper were used, all made from bleached pulp. These contained: (1) 10% calcium carbonate and 0.15% CYPRO 516 quaternary polyamine (American Cyanamid Company, Wayne, New Jersey) added; (2) waterleaf paper (no additives) and (3) 0.10% Alum added.

The TMA copolymer was dissolved at 0.18% and 0.093% concentrations in water containing, respectively, 0.5% and 0.25% acetic acid. The solutions were clear and colorless; pH 3. CYPRES 48, a conventional sizing resin (American Cyanamid Company, Wayne, New Jersey), was dissolved at 0.187% and 0.093%, concentrations in water. The solutions were clear; pH 9 and 8, respectively.

The two solutions of each sizing agent were used to impregnate sheets of the three paper grades to dose 0.10% and 0.20% (based on weight of the paper) of the two sizes. The sheets were drum-dried at 105°C for 1.5 minutes and post-cured in air at 105° for five minutes. Sizing evaluations were performed by means of a liquid penetration tester which employed photoelectric sensing. Water containing a green dye ("green water", pH 6.8) and TAPPI ink (pH 2.3) were used as test liquids. The results are summarized in Table 1 below.

## TABLE I

|  |  |  | Penetration Time, Sec. | |
| Size | Paper | Size Dosage,% | Green Water | TAPPI Ink |
| --- | --- | --- | --- | --- |
| TMA Copolymer | CaCO$_3$ filled | 0.10 | 2000+ | 423 |
|  |  | 0.20 | 2000+ | 597 |
|  | Waterleaf | 0.10 | 326 | 194 |
|  |  | 0.20 | 561 | 90 |
|  | Alum-treated | 0.10 | 689 | 3 |
|  |  | 0.20 | ---* | ---* |
| CYPRES 48 | CaCO$_3$-filled | 0.10 | 2 | 1 |
|  |  | 0.20 | 2 | 3 |
|  | Waterleaf | 0.10 | 4 | 3 |
|  |  | 0.20 | 2 | 3 |
|  | Alum-treated | 0.10 | 5 | 5 |
|  |  | 0.20 | 15 | 15 |

* Not tested.

These results show that the TMA copolymer was effective in yielding good sizing against water (pH, 6.8) and ink (pH, 2.3).

The foregoing patents, applications and publications are incorporated herein by reference. Many variations of the present invention will suggest themselves to those skilled in the art in light of the above, detailed description. All such obvious variations are within the full intended scope of the appended claims.

-12 -

29,606

WHAT IS CLAIMED IS:

1. A method of making an organic solvent-soluble, substantially linear copolymer of meta- or para-isopropenyl- $\alpha$, $\alpha$-dimethylbenzylisocyanate and at least one other ethylenically unsaturated comonomer which is not an acrylate or a methacrylate and which is selected from the group consisting of styrene, $\alpha$-methyl-styrene, p-methyl- $\alpha$-methylstyrene, and p-methylstyrene, comprising solution polymerizing said meta- or para-isopropenyl $\alpha$, $\alpha$-dimethylbenzylisocyanate and said at least one other ethylenically unsaturated comonomer in non-aqueous solution and in the presence of a cationic polymerization catalyst.

2. A method according to Claim 1 wherein said solution polymerization is conducted in methylene chloride solution.

3. A method according to Claim 1 wherein said cationic polymerization catalyst is selected from the group consisting of $BF_3 Et_2O$ and $SnCl_4$.

4. A method according to Claim 1 wherein said copolymer contains from about 5 to about 80 mole percent repeating units derived from meta- or para- isopropenyl- $\alpha$, $\alpha$ -dimethylbenzylisocyanate and from about 20 to about 95 mole percent repeating units derived from said at least one other ethylenically unsaturated comonomer, having a molecular weight of from about 500 to about 500,000.

5. A method according to Claim 4 wherein said copolymer has a molecular weight of from about 20,000 to about 50,000.

6. A method according to Claim 1, wherein said copolymer contains from about 30 to about 80 mole percent repeating units derived from meta- or para-isopropenyl-$\alpha$,$\alpha$-dimethylbenzylisocyanate and from about 20 to about 70 mole percent repeating units derived from styrene or $\alpha$-methylstyrene wherein said cationic polymerization catalyst is $BF_3$ $Et_2O$, and wherein the solution polymerization is carried out at temperature of from about -80°C to about 0°C.

7. A method according to Claim 6, comprising:

(a) forming a reaction mixture comprising non-aqueous solvent, $BF_3$ $Et_2O$, and all of the meta- or para-isopropenyl-$\alpha$,$\alpha$-dimethylbenzylisocyanate to be incorporated into said copolymer and from 25 to about 50 percent of said total amount of styrene or $\alpha$-methylstyrene to be incorporated into said copolymer; and

(b) adding the remaining portion of said styrene or $\alpha$-methylstyrene to said reaction volume under polymerization reaction conditions while maintaining a substantially constant monomeric composition in said reaction mixture to form the copolymer having a substantially homogeneous polymeric composition.

8. A method according to Claim 6, wherein additional cationic polymerization catalyst is added in the course of the copolymerization.

9. A copolymer formed by the method of Claim 1.

10. A copolymer according to Claim 9 containing from about 5 to about 80 percent repeating units derived from meta- or para-isopropenyl-$\alpha$,$\alpha$-dimethylbenzyliso-cyanate and from about 20 to about 95 mole percent repeating units derived from styrene or $\alpha$-methylstyrene.

11. A copolymer according to Claim 9 having from about 40 to about 70 mole percent repeating units derived from meta- or para-isopropenyl- $\alpha$, $\alpha$-dimethylbenzylisocyanate, and from about 30 to about 60 mole percent repeating units derived from styrene or $\alpha$-methylstyrene.

12. A copolymer according to Claim 11 having a molecular weight of from about 20,000 to about 50,000.

13. A method of forming a copolymer according to Claim 10, comprising solution polymerizing said meta- or para-isopropenyl- $\alpha$, $\alpha$-dimethylbenzylisocyanate and styrene or $\alpha$-methylstyrene in a mixed solvent comprising methylene chloride and toluene and in the presence of a cationic polymerization catalyst selected from the group consisting of $BF_3 Et_2O$ and $SnCl_4$, wherein said polymerization is carried out at a temperature of from about -80°C to about 0°C.

14. A method according to Claim 13, comprising:

(a) forming a reaction volume comprising said solvent, cationic polymerization catalyst, all of said styrene or $\alpha$-methylstyrene to be incorporated into said copolymer, and from about 25 to about 50 percent of the amount of metaor para-isopropenyl- $\alpha$, $\alpha$-dimethylbenzylisocyanate to be incorporated into said copolymer; and

(b) adding the remaining portion of meta- or para-isopropenyl- $\alpha$, $\alpha$-dimethylbenzylisocyanate to said reaction volume under polymerization reaction conditions while maintaining a substantially constant monomer composition in said reaction volume, to form said copolymer with a substantially homogeneous polymeric composition.